# EUROPÄISCHE PATENTSCHRIFT

(11) **EP 3 366 384 B1**
(45) Veröffentlichungstag und Bekanntmachung des Hinweises auf die Patenterteilung: **27.11.2019**
(21) Anmeldenummer: 17157539.2
(22) Anmeldetag: 23.02.2017
(51) Int. Cl.: B21K 1/60, F16B 19/10, B21J 15/04

(54) **VERFAHREN ZUM HERSTELLEN EINES BLINDNIETS, BLINDNIET UND BEFESTIGUNGSANORDNUNG**
METHOD OF MANUFACTURING A BLIND RIVET, BLIND RIVET AND FIXING ASSEMBLY
METHODE DE FABRICATION D'UN RIVET AVEUGLE, RIVET AVEUGLE ET ASSEMBLAGE DE FIXATION

(43) Veröffentlichungstag der Anmeldung: 29.08.2018
(73) Patentinhaber: Newfrey LLC, New Britain, CT 06053 (US)
(72) Erfinder: WAGNER, Tobias, 35394 Giessen (DE); NEUL, Thorsten, 35394 Giessen (DE); SCHMITT, Andreas, 35394 Giessen (DE); LUTZ, Oliver, 35394 Giessen (DE); SCHNEIDER, Stefan, 35394 Giessen (DE)
(74) Vertreter: Witte, Weller & Partner Patentanwälte mbB

(56) Entgegenhaltungen:
- EP-A1- 0 691 479
- WO-A1-00/68583
- DE-A1-102010 017 296
- GB-A- 2 464 674
- US-A- 2 030 167

## Beschreibung

### Gebiet der Erfindung

Die vorliegende Erfindung betrifft ein Verfahren zum Herstellen eines Blindniets, einen Blindniet zu Verbindung von wenigstens zwei Bauteilen, eine Befestigungsanordnung mit zwei Bauteilen, die durch Setzen eines Blindniets verbunden werden und ein Prägewerkzeug zum Herstellen eines Blindniets.

### Hintergrund der Erfindung

Blindniete dienen dazu, Werkstücke dauerhaft miteinander zu verbinden. Die Werkstücke haben üblicherweise durchdringende Bohrungen, die miteinander zur Deckung gebracht werden und in die der Blindniet eingesetzt und dann durch Verformen befestigt wird. Ein befestigter Blindniet spannt die Werkstücke gegeneinander.

In der Kraftfahrzeugindustrie werden Blindniete unter anderem verwendet, um Anbauteile, wie Fensterhebemotoren, Lautsprecher und andere Teile, mit einem oder mehreren Blindnieten an einem Aggregateträger, beispielsweise einem Türmodulträger, zu befestigen.

Blindniete weisen, in an sich bekannter Weise, eine Niethülse mit einem Hülsenkopf, einem Hülsenschaft und einem in einer Längsbohrung der Niethülse angeordneten Nietdorn auf.

Die Verbindung wird durch die Ausbildung eines Schließkopfes beim Setzen des Blindniets hervorgerufen. Eine radiale Weitung des Hülsenschafts beim Setzen des Blindnietes kann ein Sprengen der Befestigungsbohrung des Bauteils verursachen. Das Begrenzen der radialen Weitung von Blindnieten im Bereich des Hülsenschaftes, welcher sich im Nietloch befindet, ist erforderlich, um die Lochlaibung des Fügeguts kontrollieren zu können. Beschädigungen müssen vermieden werden. Insbesondere müssen Beschädigungen gerade bei Kunststoffbauteilen und Faserverbundstoffen (CFK) vermieden werden.

Darüber hinaus ist es erforderlich, dass sich der Schließkopf ausbildet bevor der Hülsenschaft eine nennenswerte radiale Weitung zeigt.

Definierte Klemmbereiche von Blindnieten können so unabhängig vom Lochdurchmesser des setzkopfseitigen Fügegutes garantiert werden.

Ein vor Schließkopfausbildung vorzeitiges Kollabieren des Nietschaftes wird durch Aussteifungen eines Teiles des Nietschafts (oder Hülsenschafts) desselben reduziert.

Das Dokument DE102010017296, welches die Basis für den Oberbegriff des Anspruchs 6 bildet, offenbart einen Hülsenschaft mit zwei Bereichen, wobei einer der beiden Bereiche verfestigt ist, um eine radiale Weitung der Niethülse in der Bohrung des Werkstücks zu vermindern.

Aus dem Dokument EP0677666A1 ist auch ein Blindniet mit kaltverfestigter Niethülse beschrieben.

Die Aussteifung der Niethülse bewirkt eine Ausdünnung der Hülse, was wiederum zu einem Festigkeitsverlust führt. Zum anderen wird auch die Klemmlänge verringert, da durch das Einsacken der Hülse nicht genug Material übrig bleibt, um einen Schließkopf im oberen Klemmbereich auszubilden. Besonders gravierend fällt dies aus, wenn das Oberblech einen großen Lochdurchmesser aufweist, wodurch der Niet weiter einsacken kann, da keine enge Bohrung vorhanden ist, welche die radiale Weitung und damit das Einsacken bremst.

Außerdem befinden sich nach dem Stand der Technik Schaftausteifungen, welche eine zylindrische Prägung oder Walzung zeigen, grundsätzlich in einem instabilen Zustand. Im Wesentlichen kann ein plötzliches radiales Ausbrechen des Nietschaftes vorkommen, oder auch nicht. Das plötzliche Ausbrechen wird initiiert durch übliche Fertigungstoleranzen in Massenfertigungen von Kleineisenteilen dieser Art. Form- und Lagetoleranzen von Nietdorn und Hülsenschaft selbst und zueinander im komplettierten Zustand lassen die Niethülse bevorzugt an einer Stelle und in einer Richtung kollabieren.

Schaftaussteifungen werden auch durch geometrische Aufdickungen der Hülse umgesetzt. Allerdings zeigen diese zum Teil geringere Standfestigkeiten als kaltverfestigte Aussteifungen.

Schaftaussteifungen werden außerdem sehr kostenintensiv durch induktive Härtung von Stahl-Niethülsen erreicht.

Der vorliegenden Erfindung liegt daher die Aufgabe zugrunde, einen verbesserten Blindniet herzustellen, wobei der Klemmlängenbereich vergrößerbar ist, der Blindkopfdurchmesser der fertiggestellten Blindnietverbindung und/oder die Klemmkraft der Blindnietverbindung vergrößert werden kann.

### Zusammenfassung der Erfindung

Die oben genannte Aufgabe wird gelöst, durch ein Verfahren zum Herstellen einer Blindniete mit den Schritten:
- Bereitstellen einer Niethülse mit einem Hülsenkopf und einem Hülsenschaft, der sich entlang einer Längsachse von dem Hülsenkopf bis zu einem Fußende erstreckt, wobei sich eine Längsbohrung durch die Niethülse hindurch erstreckt, wobei der Hülsenschaft einen an den Hülsenkopf angrenzenden ersten Abschnitt und einen sich daran anschließenden und bis zum Fußende erstreckenden zweiten Abschnitt aufweist,
- Bereitstellen eines Nietdorns, wobei der Nietdorn einen Dornschaft mit einem Dornkopf aufweist,
- Durchführen des Nietdorns durch die Längsbohrung der Niethülse, so dass der Dornkopf mit dem Fußende in Wirkverbindung steht,
- Bereitstellen eines Prägewerkzeugs,
- Verbinden des Nietdorns mit der Niethülse mit dem Prägewerkzeug,
wobei vor der Verbindung des Nietdorns mit der Niethülse der erste Abschnitt eine radial nach außen versetzte Außenfläche aufweist, so dass eine Schulter zwischen den Außenflächen des ersten und zweiten Abschnitts ausgebildet ist, wobei das Prägewerkzeug eine Prägebacke mit einem ersten Prägebereich und einem zweiten Prägebereich aufweist, wobei der erste Prägebereich mit dem ersten Abschnitt wirkt und der zweite Prägebereich mit dem zweiten Abschnitt wirkt, wobei der erste Prägebereich während der Verbindung des Nietdorns mit der Niethülse den ersten Abschnitt verfestigt, so dass die Festigkeit des ersten Abschnitts der Niethülse gegenüber der Festigkeit des zweiten Abschnitts erhöht ist, und wobei die Schulter zwischen den Außenflächen des ersten und zweiten Abschnitts nach der Verfestigung erhalten bleibt.

Die Doppelverfestigung (durch den gestuft ausgebildeten ersten Abschnitt und seine Verfestigung durch Prägung) erlaubt eine sehr gute Versteifung des ersten Abschnitts. Die Verbindung des Nietdorns mit der Niethülse und die Verfestigung durch Prägung werden durch einen einzigen Verfahrensschritt durchgeführt, so dass das Verfahren besonders vorteilhaft ist. Es sind keine weiteren Schritte oder Werkzeuge nötig.

Durch das Prägewerkzeug entsteht eine verfestigte Stufe, welche die nötige Festigkeit aufweist, um den oberen Teil der Hülse so zu verfestigen, dass keine radiale Weitung während des Setzvorganges stattfinden kann.

Gemäß einer weiteren bevorzugten Ausführungsform bleibt die Länge der Niethülse vor und nach der Verfestigung konstant. Insbesondere bleibt die Länge des Hülsenschafts (bzw. des ersten Abschnitts) vor und nach der Verfestigung konstant. Es besteht keine Verlängerung der Niethülse während der Verfestigung.

In einer bevorzugten Ausführungsform bildet der erste Prägebereich eine Stufe mit dem zweiten Prägebereich aus. Die Prägebacke mit dem ersten Prägebereich und dem zweiten Prägebereich ist einstückig. Die Schulter der Niethülse bleibt durch diese Stufe erhalten.

Mit Hilfe des Prägedesigns (Stufenprägung) ist es möglich, eine Stufenhülse zu verfestigen, ohne die Hülse weiter zu längen. Der erste Abschnitt des Hülsenschafts weist vor der Verbindung einen größeren Außendurchmesser als der zweite Abschnitt auf. Der Außendurchmesser des ersten Abschnitts bleibt nach der Verbindung größer als der Außendurchmesser des zweiten Abschnitts.

In einer weiteren bevorzugten Ausführungsform weist der zweite Prägebereich eine Prägekontur auf, die eine fassartig nach außen gewölbte Form hat, um eine fassartig nach außen gewölbte Form des zweiten Bereichs herzustellen.

In einer besonders bevorzugten Ausführungsform weist die Längsbohrung vor der Verbindung einen konstanter Durchmesser auf.

Ferner wird die obige Aufgabe gelöst durch einen Blindniet zur Verbindung von wenigstens zwei Bauteilen mit:
- einer Niethülse mit einem Hülsenkopf und einem Hülsenschaft, der sich entlang einer Längsachse von dem Hülsenkopf bis zu einem Fußende erstreckt, wobei sich eine Längsbohrung durch die Niethülse hindurch erstreckt, wobei der Hülsenschaft einen an den Hülsenkopf angrenzenden ersten Abschnitt und einen sich daran anschließenden und bis zum Fußende erstreckenden zweiten Abschnitt aufweist, und
- einem Nietdorn, wobei der Nietdorn einen Dornschaft mit einem Dornkopf aufweist, wobei der Dornkopf mit dem Fußende des Nietkörpers in Wirkverbindung steht, wobei der Dornschaft in der Längsbohrung der Niethülse angeordnet ist,
wobei der zweite Abschnitt dazu ausgebildet ist, sich bei einem Setzvorgang zumindest teilweise zu einem Blindkopf zu verformen und wobei der erste Abschnitt am Außenumfang des Hülsenschaftes zur Erhöhung seiner Festigkeit plastisch verformt ist, so dass die Festigkeit des ersten Abschnitts gegenüber der Festigkeit des zweiten Abschnitts erhöht ist, dadurch gekennzeichnet, dass der erste Abschnitt eine radial nach außen versetzte Außenfläche aufweist, so dass eine Schulter zwischen den Außenflächen des ersten und zweiten Abschnitts ausgebildet ist.

So wird die Festigkeit des ersten Abschnitts gegenüber der Festigkeit des zweiten Abschnitts durch plastische Verformung und durch geometrische Verstärkung erhöht.

Die Erfindung ermöglicht ein breites Anwendungsspektrum für hülsenfaltende Blindniete. Durch die Versteifung im oberen Bereich der Niethülse kann der Blindniet bei Anwendungen mit durchgehendem Loch genauso wie bei Anwendungen mit großem Lochdurchmesser (zum Beispiel im Oberblech) verwendet werden. Bei beiden Anwendungsaufbauten gilt der gleiche Klemmbereich. Dies macht es gerade auch für Mischbauanwendungen attraktiv. Auch bei Anwendungen mit Kunststoff kann dieser Blindniet verwendet werden. Durch das Nicht-Stattfinden radialer Weitung besteht auch keinerlei Gefahr, dass die Kunststoffteile durch diese gesprengt werden.

In einer besonders bevorzugten Ausführungsform ist die Längsbohrung durch eine kontinuierliche Innenwand ohne Geometriebruch ausgebildet. In anderen Worten ist die Längsbohrung (bzw. der Längsbohrungdurchmesser) im Wesentlichen konstant entlang der Längsachse.

In einer besonders bevorzugten Ausführungsform weist der erste Abschnitt der Niethülse einen größeren Außendurchmesser als der zweite Abschnitt auf.

Gemäß einer weiteren bevorzugten Ausführungsform weist der zweite Abschnitt eine fassartig nach außen gewölbte Form auf.

In einer besonders bevorzugten Ausführungsform weist der Nietdorn ein vom Dornschaft trennbares Ziehende auf.

In einer besonders bevorzugten Ausführungsform sind der Dornschaft und das Ziehende durch einen eingeschnürten Trennabschnitt verbunden, der in der Längsbohrung liegt.

Ferner wird die obige Aufgabe gelöst durch eine Befestigungsanordnung mit zwei Bauteilen, von denen ein erstes Bauteil zugänglich und ein zweites Bauteil unzugänglich hinter dem ersten Bauteil angeordnet ist, wobei beide Bauteile miteinander fluchtende Bohrungen haben, welche von dem Blindniet durchdrungen sind, wobei der Blindniet mit dem Hülsenkopf an dem ersten Bauteil anliegt, sich mit dem Nietschaft durch die Bohrungen des ersten und zweiten Bauteils erstreckt und mit einem Teil des zweiten Abschnitts des Nietschafts einen auf der Rückseite des zweiten Bauteils aufliegenden Nietkopf bildet, so dass die zwei Bauteile miteinander verbunden sind.

In einer besonders bevorzugten Ausführungsform weist die Bohrung des ersten Bauteils einen kleineren Durchmesser als die Bohrung des zweiten Bauteils auf.

In einer besonders bevorzugten Ausführungsform stützt die Schulter sich gegen das zweite Bauteil ab, so dass die zwei Bauteile mit einem definierten Abstand zusammen verbunden sind.

In einer besonders bevorzugten Ausführungsform wird das zweite Bauteil in der Umgebung seiner Bohrung mechanisch verformt, so dass der Abstand der zwei Bauteile unabhängig von der Länge des zweiten Bereichs entlang der Längsachse ist.

Unter "Umgebung" soll ein Bereich verstanden werden, der nahe bei der Bohrung liegt. Dieser Bereich kann sich beispielsweise eine Distanz von bis zu viermal den Bohrungsdurchmesser erstrecken.

Heutzutage kann man applikationsbedingt einen variablen Abstand haben, der auch nach dem Fügevorgang bestehen bleiben soll. Bei der Verwendung von nur einem klassischen Blindniet ergibt sich folgendes Problem: Der Abstand zwischen den zwei Bauteilen kann nicht konstant gehalten werden; und dies ist bedingt durch die gleichbleibende Stufenlänge. Folge daraus ist: bei zu großem Abstand erfolgt durch die Kraft des Nietes eine Verformung des ersten oder zweiten Bauteils, und bei zu geringem Abstand wird keine Klemmkraft erzeugt. Die oben erwähnten Punkte sind mit Hilfe des erfindungsgemäßen Blindniets durch eine mechanische Verformung (zum Beispiel Sicke) mindestens von einem Fügepartner gelöst.

In einer besonders bevorzugten Ausführungsform ist das Material des ersten Bauteils anders als das Material des zweiten Bauteils.

In einer besonders bevorzugten Ausführungsform besteht das erste Bauteil und/oder das zweite Bauteil aus Kunststoff.

Schließlich wird die obige Aufgabe gelöst durch ein Prägewerkzeug zum Herstellen eines Blindniets, wobei das Prägewerkzeug eine Prägebacke mit einem ersten Prägebereich und einem zweiten Prägebereich aufweist, wobei der erste Prägebereich geeignet ist, um mit dem ersten Abschnitt zusammenzuwirken, und der zweite Prägebereich geeignet ist, um mit dem zweiten Abschnitt zusammenzuwirken, und wobei der erste Prägebereich eine Stufe bezüglich des zweiten Prägebereichs ausbildet.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1a eine schematische Ansicht einer Niethülse eines erfindungsgemäßen Blindniets ;
Fig. 1b eine schematische Ansicht eines Nietdorns eines erfindungsgemäßen Blindniets;
Fig. 1c eine schematische Ansicht des Nietdorns von Fig. 1b und der Niethülse von Fig. 1a zusammen ;
Fig. 1d eine schematische Ansicht des Prägens des Blindniets von Fig. 1c;
Fig. 1e eine schematische Ansicht des Blindniets von Fig. 1d nach dem Prägen mit einer stufenförmigen Niethülse;
Fig. 2 eine schematische Querschnittansicht eines Prägewerkzeugs gemäß einer Ausführungsform;
Fig. 3 eine Ausführungsform einer Blindnietanordnung;
Fig. 4 eine zweite Ausführungsform einer Blindnietanordnung;
Fig. 5 eine dritte Ausführungsform einer Blindnietanordnung.

### Detaillierte Beschreibung bevorzugter Ausführungsformen vorliegender Erfindung

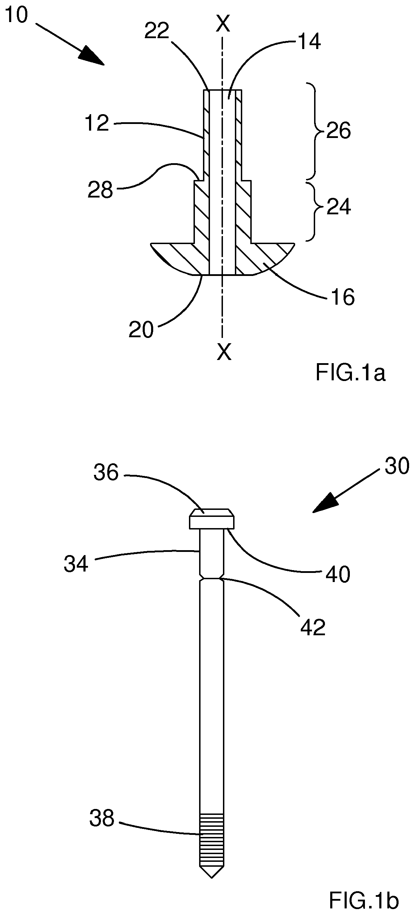

Fig. 1a zeigt eine erste Ausführungsform einer Niethülse 10. Die Niethülse 10 weist einen länglichen Hülsenschaft 12 mit einer in axialer Richtung durchgehenden Längsbohrung 14 bzw. Längsausnehmung auf. An einem Ende des Hülsenschaftes ist ein Hülsenkopf 16 ausgebildet, der die Form einer Kreisringscheibe hat und zur Anlage an einem Werkstück 18 bestimmt ist. Der Hülsenkopf 16 ist beispielsweise um eine Längsachse X angeordnet. Die Längsbohrung 14 erstreckt sich entlang der Längsachse X. Die Längsbohrung 14 ist beispielsweise in der Niethülse 10 zentriert. Die dem Hülsenschaft 12 abgekehrte Seite des Hülsenkopfs 16 kann mit einer ebenen Abstützfläche 20 versehen sein, die der Abstützung des vorderen Endes eines Nietwerkzeugs dienen kann. An seinem dem Hülsenkopf 16 entgegengesetzten Ende bildet der Hülsenschaft 12 ein Fußende 22.

Der Hülsenschaft 12 weist einen an den Hülsenkopf 16 angrenzenden ersten Abschnitt 24 und einen sich daran anschließenden und bis zum Fußende 22 erstreckenden zweiten Abschnitt 26 auf.

Der Hülsenschaft 12 bildet eine Stufe aus, wie in Fig. 1a dargestellt. Der erste Abschnitt 24 weist eine gegenüber dem zweiten Abschnitt radial nach außen versetzte Außenfläche auf. In anderen Worten ist eine Schulter 28 zwischen den Außenflächen des ersten und zweiten Abschnitts 24, 26 ausgebildet. Die Schulter 28 bildet einen Geometriebruch zwischen dem ersten und zweiten Abschnitt 24, 26.

Vorzugsweise weisen der erste und zweite Abschnitt 24, 26 einen kreisförmigen Querschnitt auf. Der erste Abschnitt 24 weist einen größeren Außendurchmesser auf als der zweite Abschnitt 26.

Die Niethülse 10 bildet in Verbindung mit einem Nietdorn 30 einen Blindniet 32.

Fig. 1b zeigt einen Nietdorn 30 mit einem Dornschaft 34, der an einem Ende einen Dornkopf 36 und an dem anderen Ende ein langgestrecktes Ziehende 38 trägt.

Der Dornkopf 36 hat einen größeren Durchmesser als der Dornschaft 34 und weist auf der dem Dornschaft 34 zugekehrten Unterseite ebene Anlageflächen 40 für das Fußende 22 des Hülsenschafts 12 auf.

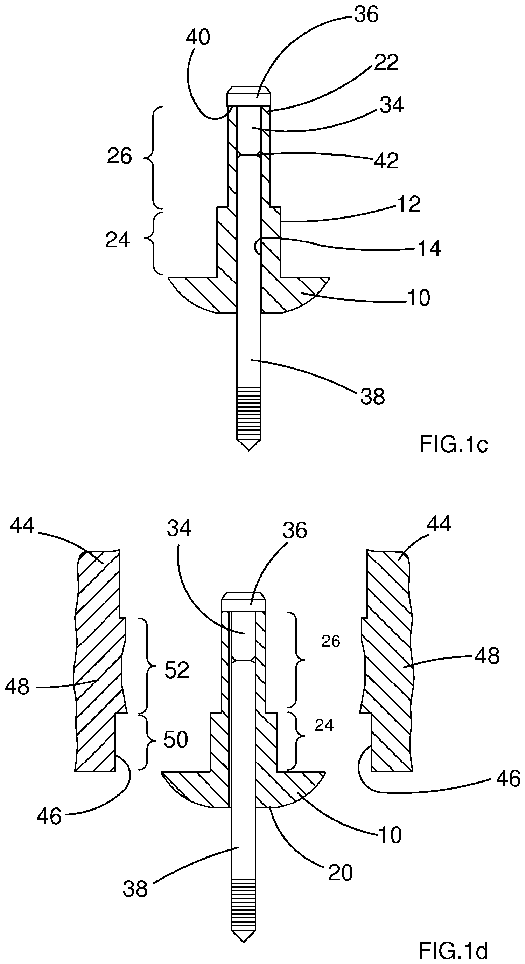

Der Dornschaft 34 hat beispielsweise einen kreisförmigen Querschnitt, aber andere Querschnitte können auch vorgesehen sein. Der Dornschaft 34 weist einen im Wesentlichen konstanten Querschnitt auf. In einer anderen Ausführungsform kann der Querschnitt des Dornschafts nicht konstant sein. Der Dornschaft 34 weist üblicherweise eine in Fig. 1b und Fig. 1c nicht näher dargestellte Sollbruchstelle 42 auf, an der der Dornschaft 34 abbricht, sobald eine gewisse Setzkraft überschritten wird.

Der Innendurchmesser der Längsbohrung 14 ist größer als der Außendurchmesser des Dornschaftes 34. Der Nietdorn 30 ist in der Längsbohrung 14 angeordnet, so dass die Anlageflächen 40 gegen das Fußende 22 des Hülsenschafts 12 angeordnet sind, wie in Fig. 1c dargestellt.

Die Sollbruchstelle 42 ist in der Längsbohrung 14 vorgesehen. Das langgestreckte Ziehende 38 liegt mindestens teilweise außerhalb der Längsbohrung 14. Insbesondere, wie in Fig. 1c dargestellt, weist der Nietdorn 30 einen ersten Dornbereich und einen zweiten Dornbereich auf. Der erste Dornbereich erstreckt sich von dem Dornkopf innerhalb der Längsbohrung bis hin zu der Sollbruchstelle. Der zweite Dornbereich erstreckt sich von der Sollbruchstelle aus dem Hülsenkopf heraus.

Eine form- oder kraftschlüssige Verbindung (oder mechanische Verriegelung) ist zwischen Nietdorn 30 und Niethülse 10 vorgesehen. Zur mechanischen Verriegelung wird eine profilierte Aufwalzung vorgesehen, in die hinein Material der Niethülse 10 durch Verprägen eingebracht wird.

Insbesondere ist ein Prägewerkzeug 44 zum Prägen der ersten und zweiten Abschnitte 24, 26 vorgesehen. Fig. 1d zeigt schematisch ein Prägewerkzeug, mittels dessen die Prägung realisiert wird. Die Prägung in den ersten und zweiten Abschnitten 24, 26 ist vorzugsweise eine rotationssymmetrische Prägung.

Während der Verbindung des Nietdorns 30 mit der Niethülse 10 wird der erste Abschnitt 24 verfestigt. Die Verfestigung erfolgt durch eine Kaltumformung, die durch das Prägewergzeug 44 herbeigeführt wird. Das Prägewerkzeug 44 weist eine oder mehrere Prägebacke(n) 48 mit einem ersten Prägebereich 50 und einem zweiten Prägebereich 52 auf. Der erste Prägebereich wirkt mit dem ersten Abschnitt und der zweite Prägebereich wirkt mit dem zweiten Abschnitt zusammen. Somit erfolgt die Verfestigung des ersten Abschnitts 24 durch die Prägekontur 46 des ersten Prägebereichs 52.

Insbesondere bleibt nach der Verbindung des Nietdorns 30 und der Niethülse 10 ein Geometriebruch zwischen dem ersten und dem zweiten Abschnitt bestehen, so dass die Festigkeit des ersten Abschnitts des Hülsenschafts gegenüber der Festigkeit des zweiten Abschnitts erhöht ist.

Der zweite Prägebereich 52 weist beispielsweise eine Prägekontur 46 auf, die eine fassartig gewölbte Form (oder einen bogenförmigen Verlauf) hat, um eine fassartig nach außen gewölbte Form des zweiten Bereichs 26 herzustellen. Nach außen bedeutet hier die entgegengesetzte Richtung der Längsbohrung 14.

Das Prägewerkzeug 44 weist einen Geometriebruch 54 zwischen dem ersten und dem zweiten Prägebereich 50, 52 auf. Geometriebruch bedeutet hier, dass der erste Prägebereich 50 und der zweite Prägebereich 52 nicht den gleichen Durchmesser haben. Insbesondere hat der erste Prägebereich 50 eine Geometriekontur, die anders ist als die Geometriekontur des zweiten Prägebereichs 52. Die Geometriekontur des ersten Prägebereichs ist geeignet, um die Kaltverfestigung des ersten Abschnitts 26 herzustellen.

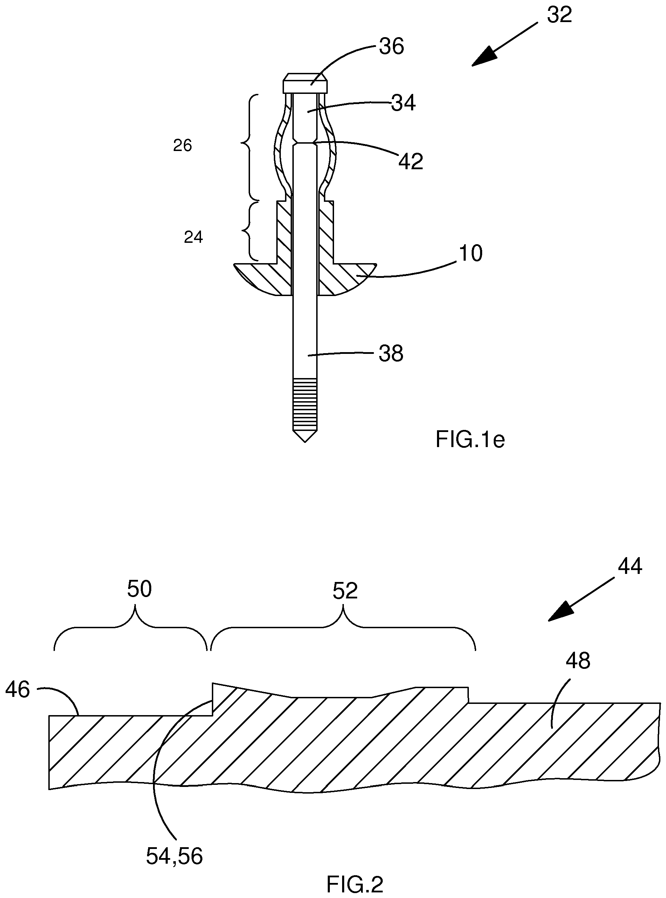

Wie in Fig. 2 dargestellt, ist die Prägebacke 48 mit einer Stufe 56 ausgebildet. Die Prägebacke 48 von Fig.2 wird insbesondere mit dem Blindniet 32 von Fig.1c benutzt, und die Schulter 28 des Blindniets 32 wird geprägt, aber nach der Prägung bleibt eine Schulter 28 zwischen dem ersten und dem zweiten Abschnitt 24, 26. Der erste Prägebereich 50 weist eine Prägekontur auf, die gegenüber dem zweiten Prägebereich 52 eine zylindrische Außenform ausbildet. Der durch den ersten Prägebereich 50 ausgebildete Außendurchmesser ist kleiner als der durch den zweiten Prägebereich 52 ausgebildete.

Die Prägebacke 48 mit der Geometriekontur von Fig. 2 prägt den Blindniet 32 von Fig. 1c, wie in Fig. 1d schematisch dargestellt.

Während der Prägung wird der erste Abschnitt 24 durch den ersten Prägebereich kaltverfestigt, und der Außendurchmesser des ersten Abschnitts bleibt größer als der des zweiten Abschnitts 26. Die Niethülse 10 verlängert sich während der Prägung nicht. In anderen Worten wird durch die Prägekontur des ersten Prägebereichs die Niethülse 10 während der Prägung nicht verlängert.

Nach der Prägung wird, wie in Fig. 1e dargestellt, der erste Abschnitt 26 eine zylindrische Form aufweisen, mit einem Außendurchmesser, der größer als der des zweiten Abschnitts ist. Der zweite Abschnitt 26 weist eine fassartig nach außen gewölbte Form auf.

Durch die gestufte Prägebacke wird eine verfestigte Stufe (d.h. der erste Abschnitt 24) an der Niethülse 10 erzeugt. Die Niethülse 10 wird in diesem ersten Abschnitt 24 verfestigt. Diese Verfestigung verhindert eine radiale Weiterung des Blindniets 32 während einem Setzvorgang an einem Werkstück 18. Der bisherige Stand der Prägewerkzeuge würde die Stufe der Niethülse 10 vor der Prägung verdrücken, wodurch eine Längung der Niethülse 10 erreicht wird und nicht eine Versteifung des ersten Abschnitts.

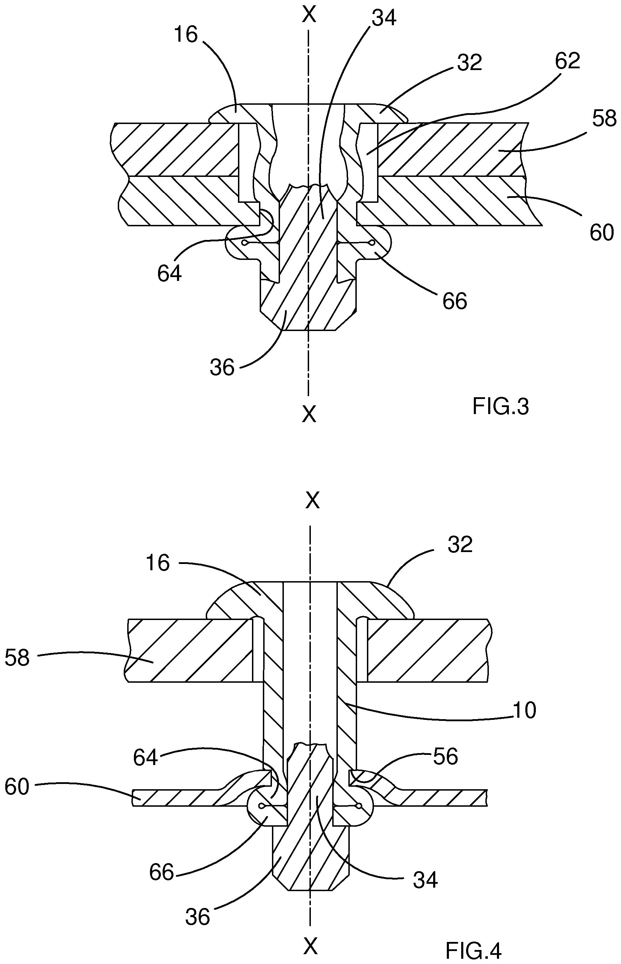

Fig. 3, Fig. 4 und Fig. 5 zeigen drei Ausführungsformen einer Befestigungsanordnung 68 mit zwei durch den Blindniet 32 von Fig. 1e verbundenen Bauteilen 58, 60. Die Bauteile 58, 60 haben Bohrungen 62, 64. Zum Verbinden wird der Blindniet 32 in die zur Deckung gebrachten Bohrungen 62, 64 der Bauteile 58, 60 eingesetzt. Mit Hilfe eines Setzwerkzeugs (nicht dargestellt), das sich an der Abstützfläche 20 des Blindniets 32 abstützt, wird dann eine Zugkraft auf das Ziehende 38 des Nietdorns 30 ausgeübt und die Niethülse 10 verformt, wobei das Fußende an den Hülsenkopf angenähert wird. Das erste Bauteil 58 ist zugänglich und das zweite Bauteil 60 ist unzugänglich hinter dem ersten Bauteil angeordnet.

Zu Beginn wird das Ziehende des Nietdorns 30 gezogen, woraufhin sich die Niethülse 10 zu verformen beginnt und einen Schließkopf 66 ausbildet. Der Schließkopf 66 wird durch Faltung des zweiten Abschnitts 26 (oder einen Teil des zweiten Abschnitts 26) ausgebildet. Der Schließkopf 66 bildet einen flach auf dem Bauteil aufliegenden Flansch aus. Der Schließkopf 66 legt sich auf das Bauteil 60, wodurch ein Kraftanstieg erfolgt. Die beiden Bauteile 58, 60 werden verklemmt. Hat die Klemmkraft einen definierten Wert erreicht, erfolgt der Abriss des Nietdorns 30 an der dafür vorgesehenen Sollbruchstelle 42.

In Fig. 3 sind die zwei Bauteile 58, 60 durch den Blindniet 32 gegeneinander verklemmt. Die zwei Bauteile sind miteinander in Kontakt. Vorzugsweise weist die Bohrung des ersten Bauteils einen größeren Durchmesser als die Bohrung des zweiten Bauteils auf. In einer anderen Ausführungsform könnten die Durchmesser der Bohrungen gleich sein, oder im Gegenteil könnte die Bohrung des ersten Bauteils einen kleineren Durchmesser als die Bohrung des zweiten Bauteils aufweisen.

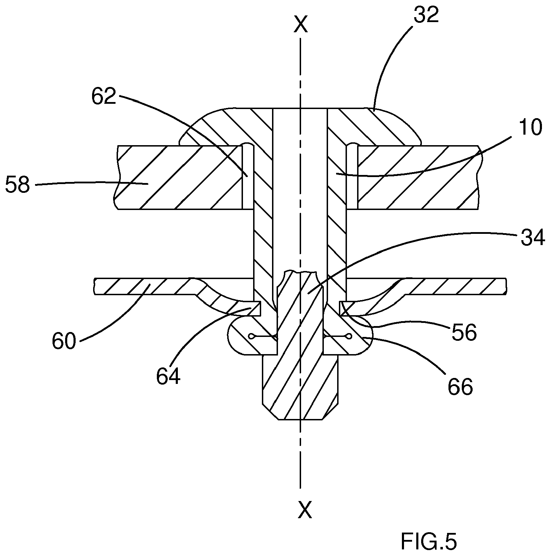

In Fig. 4 und Fig. 5 sind die zwei Bauteile mit Abstand verbunden. Insbesondere weist die Bohrung des zweiten Bauteils einen kleineren Durchmesser als der des ersten Abschnitts auf. Die Schulter 28 stützt sich auf dem zweiten Bauteil 60 ab. Die zwei Bauteile sind mit einem definierten Abstand zueinander verbunden. Der Abstand wird durch den größeren Durchmesser des ersten Abschnitts ermöglicht.

Das zweite Bauteil 60 und/oder das erste Bauteil kann in Umgebung seiner Bohrung 64 mechanisch verformt werden, wie in Fig. 4 und Fig. 5 dargestellt. Die mechanische Verformung ist beispielsweise eine Sicke. Somit kann ein variabler Abstand zwischen den zwei Bauteilen, unabhängig von der Länge des ersten Bereichs 24, entlang der Längsachse X hergestellt werden. In anderen Ausführungsformen können beide Bauteile 58, 60 oder nur das erste Bauteil 60 mechanisch verformt sein. Die mechanische Verformung kann entlang der Längsachse X in beide Richtungen stattfinden. Im Wesentlichen ist in Fig. 4 das zweite Bauteil am Umfang der Bohrung entlang der Längsachse X in Richtung des Hülsenkopfs verformt. In Fig. 5 ist das zweite Bauteil 60 am Umfang der Bohrung entlang der Längsachse X in entgegengesetzter Richtung des Hülsenkopfs verformt. Der Blindniet von Fig. 1e erlaubt somit eine Reduzierung der Teilevielfalt bei einer solchen Anordnung, wo beide Bauteile 58, 60 mit Abstand verbunden sein sollen. Es ist kein zusätzlicher Abstandhalter notwendig.

Durch diese Befestigungsanordnung 68 können auch Bauteile, die aus verschiedenen Materialen bestehen, verbunden werden.

Die Bauteile 58, 60 können aus verschiedenen Materialen wie z.B. Metallen oder Plastik oder Faserverbundstoffen (CFK) bestehen.

## Patentansprüche

1. Verfahren zum Herstellen einer Blindniete (32) mit den Schritten:
a. Bereitstellen einer Niethülse (10) mit einem Hülsenkopf (16) und einem Hülsenschaft (12), der sich entlang einer Längsachse (X) von dem Hülsenkopf (16) bis zu einem Fußende (22) erstreckt, wobei sich eine Längsbohrung (14) durch die Niethülse (10) hindurch erstreckt, wobei der Hülsenschaft (12) einen an den Hülsenkopf (16) angrenzenden ersten Abschnitt (24) und einen sich daran anschließenden und bis zum Fußende erstreckenden zweiten Abschnitt (26) aufweist,
b. Bereitstellen eines Nietdorns (30), wobei der Nietdorn einen Dornschaft (34) mit einem Dornkopf (36) aufweist,
c. Durchführen des Nietdorns (30) durch die Längsbohrung der Niethülse, so dass der Dornkopf (36) mit dem Fußende in Wirkverbindung steht,
d. Bereitstellen eines Prägewerkzeugs (44),
e. Verbinden des Nietdorns (30) mit der Niethülse (10) mit dem Prägewerkzeug,
**dadurch gekennzeichnet, dass**
vor der Verbindung des Nietdorns (30) mit der Niethülse (10) der erste Abschnitt (24) eine gegenüber dem zweiten Abschnitt (26) radial nach außen versetzte Außenfläche aufweist, so dass eine Schulter (28) zwischen den Außenflächen des ersten und zweiten Abschnitts (24, 26) ausgebildet ist, und dass
das Prägewerkzeug (44) eine Prägebacke mit einem ersten Prägebereich (50) und einem zweiten Prägebereich (52) aufweist,
wobei der erste Prägebereich (50) mit dem ersten Abschnitt (24) wirkt und der zweite Prägebereich (52) mit dem zweiten Abschnitt (26) wirkt,
wobei der erste Prägebereich (50) während der Verbindung des Nietdorns mit der Niethülse den ersten Abschnitt (24) verfestigt, so dass die Festigkeit des ersten Abschnitts der Niethülse gegenüber der Festigkeit des zweiten Abschnitts erhöht ist, und wobei die Schulter zwischen den Außenflächen des ersten und zweiten Abschnitts nach der Verfestigung erhalten bleibt.

2. Verfahren nach Anspruch 1, wobei die Länge der Niethülse (10) vor und nach der Verfestigung konstant bleibt.

3. Verfahren nach Anspruch 1 oder 2, wobei eine Stufe (56) zwischen dem ersten Prägebereich und dem zweiten Prägebereich ausgebildet ist.

4. Verfahren nach einem der Ansprüche 1 bis 3, wobei der zweite Prägebereich (52) eine Prägekontur aufweist, die eine fassartig nach außen gewölbte Form hat, um eine fassartig nach außen gewölbte Form des zweiten Abschnitt (26)herzustellen.

5. Verfahren nach einem der Ansprüche 1 bis 4, wobei vor der Verbindung die Längsbohrung (14) einen konstanten Durchmesser aufweist.

6. Blindniet (32), insbesondere durch ein Verfahren nach einem der Ansprüche 1-5 hergestellt, zur Verbindung von wenigstens zwei Bauteilen mit:
- einer Niethülse (10) mit einem Hülsenkopf und einem Hülsenschaft, der sich entlang einer Längsachse von dem Hülsenkopf bis zu einem Fußende erstreckt, wobei sich eine Längsbohrung durch die Niethülse hindurch erstreckt, wobei der Hülsenschaft einen an den Hülsenkopf angrenzenden ersten Abschnitt und einen sich daran anschließenden und bis zum Fußende erstreckenden zweiten Abschnitt aufweist, und
- einem Nietdorn (30), wobei der Nietdorn einen Dornschaft mit einem Dornkopf aufweist, wobei der Dornkopf mit dem Fußende des Nietkörpers in Wirkverbindung steht, wobei der Dornschaft in der Längsbohrung der Niethülse angeordnet ist, wobei der zweite Abschnitt dazu ausgebildet ist, sich bei einem Setzvorgang zumindest teilweise zu einem Blindkopf zu verformen
und wobei der erste Abschnitt am Außenumfang des Hülsenschaftes zur Erhöhung seiner Festigkeit plastisch verformt ist, so dass die Festigkeit des ersten Abschnitts (24) gegenüber der Festigkeit des zweiten Abschnitts (26) erhöht ist, **dadurch gekennzeichnet, dass** der erste Abschnitt (24) eine gegenüber dem zweiten Abschnitt (26) radial nach außen versetzte Außenfläche aufweist, so dass eine Schulter (28) zwischen den Außenflächen des ersten und zweiten Abschnitts (24, 26) angeordnet ist.

7. Blindniet (32) nach Anspruch 6, wobei die Längsbohrung durch eine kontinuierliche Innenwand ohne Geometriebruch ausgebildet ist, und wobei der erste Abschnitt der Niethülse einen größeren Außendurchmesser als der zweite Abschnitt (26) aufweist.

8. Blindniet (32) nach Anspruch 6 oder Anspruch 7, wobei der zweite Abschnitt eine fassartig nach außen gewölbte Form aufweist.

9. Blindniet (32) nach einem der Ansprüche 6 bis 8, wobei der Nietdorn ein vom Dornschaft trennbares Ziehende aufweist, und wobei der Dornschaft und das Ziehende durch einen eingeschnürten Trennabschnitt verbunden sind, der in der Längsbohrung liegt.

10. Befestigungsanordnung (68) mit zwei Bauteilen (58, 60), die durch Setzen eines Blindniets (32) nach einem der Ansprüche 6 bis 9 verbunden sind, mit einem zugänglichen ersten Bauteil und einem unzugänglich hinter dem ersten Bauteil angeordneten zweiten Bauteil, wobei beide Bauteile miteinander fluchtende Bohrungen haben, welche von dem Blindniet durchdrungen sind, wobei der Blindniet mit dem Hülsenkopf an dem ersten Bauteil anliegt, sich mit dem Nietschafts durch die Bohrungen des ersten und zweiten Bauteils erstreckt und mit einem Teil des zweiten Abschnitts des Nietschafts einen auf der Rückseite des zweiten Bauteils aufliegenden Nietkopf bildet, so dass die zwei Bauteile zusammen verbunden sind.

11. Befestigungsanordnung (68) nach Anspruch 10, wobei die Bohrung des zweiten Bauteils einen kleineren Durchmesser als der des ersten Abschnitts aufweist, und wobei die Schulter sich auf dem zweiten Bauteil abstützt, so dass die zwei Bauteile mit einem definierten Abstand zueinander verbunden sind.

12. Befestigungsanordnung (68) nach Anspruch 10 oder Anspruch 11, wobei das zweite Bauteil in Umgebung seiner Bohrung mechanisch verformt ist, so dass ein variabler Abstand zwischen den zwei Bauteilen, unabhängig von der Länge des ersten Bereichs entlang der Längsachse, ausgeführt werden kann.

13. Befestigungsanordnung (68) nach einem der Ansprüche 10 bis 12, wobei das Material des ersten Bauteils ein anderes als das Material des zweiten Bauteils ist.

14. Befestigungsanordnung (68) nach einem der Ansprüche 10 bis 13, wobei das erste Bauteil und/oder das zweite Bauteil aus Kunststoff besteht.

15. Prägewerkzeug (44) zum Herstellen eines Blindniets (32) nach einer der Ansprüche 6 bis 9, wobei das Prägewerkzeug eine Prägebacke mit einem ersten Prägebereich und einem zweiten Prägebereich aufweist, wobei der erste Prägebereich geeignet ist, mit dem ersten Abschnitt zusammenzuwirken, und der zweite Prägebereich mit dem zweiten Abschnitt zusammen zu wirken geeignet ist, und wobei der erste Prägebereich eine Stufe mit dem zweiten Prägebereich ausbildet.

## Claims

1. A method of manufacturing a blind rivet (32), comprising the steps of:
a. providing a rivet sleeve (10) which comprises a sleeve head (16) and a sleeve shaft (12) extending along a longitudinal axis (X) from the sleeve head (16) to a foot end (22), wherein a longitudinal bore (14) extends through the rivet sleeve (10), wherein the sleeve shaft (12) has a first portion (24) adjacent the sleeve head (16) and a second portion (26) adjoining same and extending to the foot end,
b. providing a mandrel (30), the mandrel having a mandrel shaft (34) with a mandrel head (36),
c. passing the mandrel (30) through the longitudinal bore of the rivet sleeve so that the mandrel head (36) is operatively connected to the foot end,
d. providing an embossing tool (44),
e. connecting the mandrel (30) with the rivet sleeve (10) by means of the embossing tool,
**characterized in that**
prior to connection of the rivet mandrel (30) to the rivet sleeve (10), the first portion (24) has an outer surface radially outwardly displaced relative to the second portion (26) so that a shoulder (28) is formed between the outer surfaces of the first and second portions (24, 26), and that
the embossing tool (44) has an embossing jaw with a first embossing region (50) and a second embossing region (52),
wherein the first embossing region (50) acts with the first portion (24) and the second embossing region (52) acts with the second portion (26),
wherein the first embossing region (50) hardens the first portion (24) during connection of the rivet mandrelwith the rivet sleeve such that the strength of the first portion of the rivet sleeve is increased over the strength of the second portion, and wherein the shoulder between the outer surfaces of the first and second portions is maintained after hardening.

2. The method according to claim 1, wherein the length of the rivet sleeve (10) remains constant before and after hardening.

3. The method according to claim 1 or 2, wherein a step (56) is formed between the first embossing region and the second embossing region.

4. The method according to any one of claims 1 to 3, wherein the second embossing region (52) has an embossing contour having a barrel-like outwardly curved shape to produce a barrel-like outwardly curved shape of the second portion (26).

5. The method according to any one of claims 1 to 4, wherein the longitudinal bore (14) has a constant diameter prior to connection.

6. A blind rivet (32), in particular produced by a method according to one of claims 1-5, for connecting at least two components to each other:
- a rivet sleeve (10) having a sleeve head and a sleeve shaft which extends along a longitudinal axis from the sleeve head to a foot end, wherein a longitudinal bore extends through the rivet sleeve, wherein the sleeve shaft has a first portion adjacent the sleeve head and a second portion adjoining same and extending to the foot end; and
- a rivet mandrel (30), the rivet mandrel having a mandrel shaft with a mandrel head, the mandrel head being operatively connected to the foot end of the rivet body, the mandrel shaft being disposed in the longitudinal bore of the rivet sleeve,
the second portion being designed to deform at least partially into a blind head during a setting operation,
and wherein the first portion is plastically deformed at the outer periphery of the sleeve shaft to increase its strength so that the strength of the first portion (24) is increased over the strength of the second portion (26),
**characterized in that** the first portion (24) has an outer surface radially outwardly displaced relative to the second portion (26) so that a shoulder (28) is disposed between the outer surfaces of the first and second portions (24, 26).

7. The blind rivet (32) according to claim 6, wherein the longitudinal bore is formed by a continuous inner wall without a geometric break, and wherein the first portion of the rivet sleeve has a larger outer diameter than the second portion (26).

8. The blind rivet (32) as claimed in claim 6 or claim 7, wherein the second portion has an outwardly convex barrel-like shape.

9. The blind rivet (32) according to any one of claims 6 to 8, wherein the rivet mandrel has a pulling end separable from the mandrel shaft, and wherein the mandrel shaft and the pulling end are connected by a constricted separating portion located in the longitudinal bore.

10. A fastening assembly (68) comprising two components (58, 60) connected by setting a blind rivet (32) according to any one of claims 6 to 9, comprising an accessible first component and a second component located inaccessibly behind the first component, both components having aligned bores penetrated by the blind rivet, the blind rivet with the sleeve head abutting the first component, extending with the rivet shaft through the bores of the first and second components and forming with a part of the second portion of the rivet shaft a rivet head resting on the back of the second component so that the two components are connected together.

11. The fastening assembly (68) as claimed in claim 10, wherein the bore of the second component has a smaller diameter than that of the first portion, and wherein the shoulder rests on the second component so that the two components are connected at a defined distance from each other.

12. The fastening assembly (68) according to claim 10 or claim 11, wherein the second component is mechanically deformed in the vicinity of its bore so that a variable distance can be realized between the two components irrespective of the length of the first region along the longitudinal axis..

13. The fastening assembly (68) according to any one of claims 10 to 12, wherein the material of the first component is different from the material of the second component.

14. The fastening arrangement (68) according to any one of claims 10 to 13, wherein the first component and/or the second component is made of plastic.

15. An embossing tool (44) for manufacturing a blind rivet (32) according to any of claims 6 to 9, the embossing tool comprising an embossing jaw having a first embossing region and a second embossing region, wherein the first embossing region is adapted to cooperate with the first portion and the second embossing region is adapted to cooperate with the second portion, and wherein the first embossing region forms a step with the second embossing region.

## Revendications

1. Procédé de fabrication d'un rivet aveugle (32), comprenant les étapes suivantes :
a. fourniture d'une douille de rivet (10) avec une tête de douille (16) et une tige de douille (12) qui s'étend le long d'un axe longitudinal (X) depuis la tête de douille (16) jusqu'à une extrémité de base (22), un alésage longitudinal (14) s'étendant à travers la douille de rivet (10), la tige de douille (12) présentant une première portion (24) adjacente à la tête de douille (16) et une deuxième portion (26) se raccordant à celle-ci et s'étendant jusqu'à l'extrémité de base,
b. fourniture d'un mandrin de rivet (30), le mandrin de rivet présentant une tige de mandrin (34) avec une tête de mandrin (36),
c. guidage du mandrin de rivet (30) à travers l'alésage longitudinal de la douille de rivet de telle sorte que la tête de mandrin (36) soit en liaison fonctionnelle avec l'extrémité de base,
d. fourniture d'un outil de matriçage (44),
e. Connexion du mandrin de rivet (30) à la douille de rivet (10) au moyen de l'outil de matriçage,
**caractérisé en ce**
**qu'**avant la connexion du mandrin de rivet (30) à la douille de rivet (10), la première portion (24) présente une surface extérieure décalée radialement vers l'extérieur par rapport à la deuxième portion (26) de telle sorte qu'un épaulement (28) soit réalisé entre les surfaces extérieures de la première et de la deuxième portion (24, 26), et **en ce que**
l'outil de matriçage (44) présente une mâchoire de matriçage avec une première région de matriçage (50) et une deuxième région de matriçage (52),
la première région de matriçage (50) agissant avec la première portion (24) et la deuxième région de matriçage (52) agissant avec la deuxième portion (26),
la première région de matriçage (50), au cours de la connexion du mandrin de rivet à la douille de rivet, solidifiant la première portion (24), de telle sorte que la solidité de la première portion de la douille de rivet soit accrue par rapport à la solidité de la deuxième portion, et l'épaulement entre les surfaces extérieures de la première et de la deuxième portion étant maintenu après la solidification.

2. Procédé selon la revendication 1, dans lequel la longueur de la douille de rivet (10) avant et après la solidification reste constante.

3. Procédé selon la revendication 1 ou 2, dans lequel un étage (56) est réalisé entre la première région de matriçage et la deuxième région de matriçage.

4. Procédé selon l'une quelconque des revendications 1 à 3, dans lequel la deuxième région de matriçage (52) présente un contour de matriçage qui présente une forme courbée vers l'extérieur à la manière d'un tonneau, afin de créer une forme courbée vers l'extérieur à la manière d'un tonneau de la deuxième portion (26).

5. Procédé selon l'une quelconque des revendications 1 à 4, dans lequel, avant la connexion, l'alésage longitudinal (14) présente un diamètre constant.

6. Rivet aveugle (32), en particulier fabriqué par un procédé selon l'une quelconque des revendications 1 à 5 pour la connexion d'au moins deux composants, comprenant :
- une douille de rivet (10) avec une tête de douille et une tige de douille qui s'étend le long d'un axe longitudinal de la tête de douille jusqu'à une extrémité de base, un alésage longitudinal s'étendant à travers la douille de rivet, la tige de douille présentant une première portion adjacente à la tête de douille et une deuxième portion se raccordant à celle-ci et s'étendant jusqu'à l'extrémité de base, et
- un mandrin de rivet (30), le mandrin de rivet présentant une tige de mandrin avec une tête de mandrin, la tête de mandrin étant en liaison fonctionnelle avec l'extrémité de base du corps de rivet, la tige de mandrin étant disposée dans l'alésage longitudinal de la douille de rivet,
la deuxième portion étant réalisée de manière à se déformer au moins en partie pour former une tête aveugle lors d'une opération de pose et la première portion étant déformée plastiquement au niveau de la périphérie extérieure de la tige de douille pour augmenter sa solidité de telle sorte que la solidité de la première portion (24) soit accrue par rapport à la solidité de la deuxième portion (26), **caractérisé en ce que** la première portion (24) présente une surface extérieure décalée radialement vers l'extérieur par rapport à la deuxième portion (26), de telle sorte qu'un épaulement (28) soit disposé entre les surfaces extérieures de la première et de la deuxième portion (24, 26).

7. Rivet aveugle (32) selon la revendication 6, dans lequel l'alésage longitudinal est réalisé par une paroi intérieure continue sans rupture de géométrie, et la première portion de la douille de rivet présente un plus grand diamètre extérieur que la deuxième portion (26).

8. Rivet aveugle (32) selon la revendication 6 ou la revendication 7, dans lequel la deuxième portion présente une forme courbée vers l'extérieur à la manière d'un tonneau.

9. Rivet aveugle (32) selon l'une quelconque des revendications 6 à 8, dans lequel le mandrin de rivet présente une extrémité de traction pouvant être séparée de la tige de mandrin, et la tige de mandrin et l'extrémité de traction sont connectées par une portion de séparation rétrécie qui est située dans l'alésage longitudinal.

10. Agencement de fixation (68) comprenant deux composants (58, 60) qui sont connectés par pose d'un rivet aveugle (32) selon l'une quelconque des revendications 6 à 9, comprenant un premier composant accessible et un deuxième composant non accessible disposé derrière le premier composant, les deux composants présentant des alésages alignés l'un avec l'autre qui sont traversés par le rivet aveugle, le rivet aveugle s'appliquant avec la tête de douille contre le premier composant, s'étendant avec la tige de rivet à travers les alésages du premier et du deuxième composant et formant avec une partie de la deuxième portion de la tige de rivet une tête de rivet s'appliquant sur le côté arrière du deuxième composant, de telle sorte que les deux composants soient connectés l'un à l'autre.

11. Agencement de fixation (68) selon la revendication 10, dans lequel l'alésage du deuxième composant présente un plus petit diamètre que la première portion, et l'épaulement s'appuie sur le deuxième composant de telle sorte que les deux composants soient connectés l'un à l'autre avec une distance définie.

12. Agencement de fixation (68) selon la revendication 10 ou la revendication 11, dans lequel le deuxième composant est déformé mécaniquement dans l'environnement de son alésage de telle sorte qu'une distance variable entre les deux composants puisse être réalisée indépendamment de la longueur de la première région le long de l'axe longitudinal.

13. Agencement de fixation (68) selon l'une quelconque des revendications 10 à 12, dans lequel le matériau du premier composant est différent du matériau du deuxième composant.

14. Agencement de fixation (68) selon l'une quelconque des revendications 10 à 13, dans lequel le premier composant et/ou le deuxième composant se composent de plastique.

15. Outil de matriçage (44) pour la fabrication d'un rivet aveugle (32) selon l'une quelconque des revendications 6 à 9, l'outil de matriçage présentant une mâchoire de matriçage avec une première région de matriçage et une deuxième région de matriçage, la première région de matriçage étant appropriée pour coopérer avec la première portion et la deuxième région de matriçage étant appropriée pour coopérer avec la deuxième portion, et la première région de matriçage constituant un étage avec la deuxième région de matriçage.
